# EUROPÄISCHE PATENTSCHRIFT

(11) **EP 2 835 618 B1**
(45) Veröffentlichungstag und Bekanntmachung des Hinweises auf die Patenterteilung: **26.02.2020**
(21) Anmeldenummer: 14178852.1
(22) Anmeldetag: 29.07.2014
(51) Int. Cl.: G01F 1/075, G01F 15/00

(54) **Durchflussmesser mit einem Rotor für ein wasserführendes Haushaltsgerät**
Flow meter with a rotor for a water-bearing household device
Débitmètre avec un rotor pour un appareil ménager transportant de l'eau

(30) Priorität: 07.08.2013 DE 102013215604
(43) Veröffentlichungstag der Anmeldung: 11.02.2015
(73) Patentinhaber: Robert Bosch GmbH, 70442 Stuttgart (DE)
(72) Erfinder: Loser, Florian, 83022 Rosenheim (DE); Englisch, Christian, 83324 Ruhpolding (DE); Mayer, Gebhard, 83278 Traunstein (DE)
(74) Vertreter: Bee, Joachim

(56) Entgegenhaltungen:
- DE-A1- 1 801 421
- DE-A1- 2 616 323
- DE-A1- 4 026 692
- DE-A1-102008 043 613
- US-A- 5 450 760

## Beschreibung

Die Erfindung betrifft einen Durchflussmesser zum Messen eines Durchflusses eines Fluides in einer Fluidleitung nach dem Oberbegriff des Patentanspruchs 1, wobei der Durchflussmesser einen innerhalb der Fluidleitung zumindest abschnittsweise anordbaren Rotor und eine außerhalb der Fluidleitung anordbare Sensoreinrichtung zur Erfassung einer Rotation einer Wirkfläche des Rotors hat. Zudem betrifft die Erfindung ein wasserführendes Haushaltsgerät mit einem Durchflussmesser.

Moderne wasserführende Haushaltsgeräte wie Durchlauferhitzer sind regelmäßig mit einem Durchflussmesser zur Durchflussmessung bzw. Volumenstrommessung ausgestattet. Bekannte Durchflussmesser arbeiten nach dem Hall-Prinzip. Sie haben einen in einer Zulaufleitung zumindest abschnittsweise anordbaren Rotor und einen außerhalb der Zulaufleitung anordbaren Hall-Sensor zur Erfassung einer Rotation des Rotors aufgrund des durch die Zulaufleitung einströmenden Wassers. Der Rotor kann hierzu ein Flügelrad sein, dessen Flügel Wirkflächen darstellen und hierzu aus einem Dauermagneten bestehen. Wie in der DE 10 2006 027 477 A1 gezeigt, kann alternativ das Flügelrad aus einem Kunststoffmaterial bestehen und der Rotor zumindest einen Dauermagneten als Wirkfläche aufweisen. Problematisch bei derartigen Durchflussmessern ist, dass sich Bestandteile von den Dauermagneten lösen können und somit in das Trinkwasser gelangen. Zudem kann es zu Anhaftung von eisenhaltigen Schmutzpartikeln an dem Rotor kommen. Zudem zeichnen sich derartige Rotoren durch die Magneten durch ein hohes Gewicht aus, was sich nachteilig auf die Dynamik der Durchflussmesser auswirkt.

Die Druckschrift DE 40 26 692 A1 offenbart eine Durchflussmessvorrichtung mit einem induktiven Drehbewegungsaufnehmer und einem Rotor aus Kunststoff, der mit einer Metallschicht oder Metallummantelung versehen ist. Aus der DE 26 16 323 A1 ist ein Durchflussmessgerät insbesondere für kleine und kleinste Durchflussmengen bekannt. Die Druckschrift DE 1 801 421 offenbart einen Tachometer mit einer Führvorrichtung, in der beim Vorbeigehen einer Laufvorrichtung ein Signal erzeugt werden kann.

Aufgabe der Erfindung ist es, einen Durchflussmesser zum Messen eines Durchflusses eines Fluids in einer Fluidleitung zu schaffen, der die vorgenannten Nachteile beseitigt und dessen Rotor eine hohe Dynamik aufweist. Des Weiteren ist es Aufgabe der Erfindung, ein wasserführendes Haushaltsgerät zu schaffen.

Diese Aufgabe wird gelöst durch einen Durchflussmesser mit den Merkmalen des Patentanspruch 1 und durch ein wasserführendes Haushaltsgerät mit den Merkmalen des Patentanspruchs 7. Vorteilhafte Aus- und Weiterbildungen, welche einzeln oder in Kombination miteinander eingesetzt werden können, sind Gegenstand der abhängigen Ansprüche.

Ein erfindungsgemäßer Durchflussmesser zum Messen eines Durchflusses eines Fluids in einer Fluidleitung, hat einen innerhalb der Fluidleitung zumindest abschnittsweise anordbaren Rotor und eine außerhalb der Fluidleitung anordbare Sensoreinrichtung zur Erfassung einer Rotation einer Wirkfläche des Rotors. Erfindungsgemäß weist die Sensoreinrichtung einen Schwingkreis auf, der Rotor ist dauermagnetfrei und die zumindest eine Wirkfläche ist elektrisch leitend.

Bei einer Drehung des Rotors aufgrund des durch die Fluidleitung strömenden Fluids, beispielsweise Trinkwasser, werden durch den Schwingkreis Wirbelströme in der zumindest einen elektrisch leitenden Fläche induziert, die je nach Position des Rotors zu einer unterschiedlich starken Dämpfung des Schwingkreises führen. Zum Ausgleich des Dämpfungsverlustes wird dem Schwingkreis mehr Leistung zugeführt und die Drehung des Rotors erkannt, die dann wieder ein Maß für den Durchfluss bzw. den Volumenstrom ist. Dadurch, dass der Rotor aus einem nicht dauermagnetischen Material besteht, sondern bevorzugterweise aus lebensmittelechten Materialien, können keine gesundheitsbedenkliche Partikel in das Fluid gelangen. Da der Rotor nicht dauermagnetisch ist, weist er auch keine magnetische Anziehung auf, sodass ebenfalls die Gefahr einer Anhaftung durch eisenhaltige Schmutzpartikeln an dem Rotor unterbunden ist. Ferner wird durch die Ausführung des Rotors ohne Dauermagnet sein Gewicht erheblich reduziert, was sich positiv auf die Dynamik des Durchflussmessers auswirkt. Es wird ein schnelleres Ansprechverhalten und eine geringere Nachlaufzeit als bei herkömmlichen Durchflussmessern erreicht. Die elektrische Wirkfläche enthält beispielsweise Kupfer bzw. eine Kupferlegierung. Der Schwingkreis kann mit oder ohne Kondensator ausgeführt sein.

Bei einem Ausführungsbeispiel besteht der Rotor aus einem elektrisch isolierenden Material und die zumindest eine Wirkfläche ist eine elektrisch leitende Beschichtung des Rotors. Diese kann auf einen Rotorbereich begrenzt sein oder sich vollständig über den Rotor erstrecken. Der Rotor ist bevorzugterweise ein Spritzgussteil aus Kunststoff und zeichnet sich so neben einem geringen Gewicht durch eine technisch einfache und kostengünstige Herstellung aus. Die Beschichtung wird bevorzugterweise galvanisch, per Bedampfung, per Bedruckung oder durch ein vergleichendes Verfahren auf den Rotor aufgebracht. Hierdurch lässt sich die Beschichtung sehr dünn auftragen.

Bei einem alternativen Ausführungsbeispiel besteht der Rotor aus einem elektrisch leitenden Material. Zusätzlich kann der Rotor vollständig elektrisch leitend beschichtet sein. diesem Ausführungsbeispiel entfällt die Aufbringung einer bzw. der elektrisch leitenden Beschichtung. Der Rotor an sich kann beispielsweise aus einem Leichtmetall wie Aluminiumguss hergestellt werden.

Der Schwingkreis lässt sich energiesparend ausführen, wenn die zumindest eine Wirkfläche bezogen auf die Drehachse radial außen angeordnet ist. Hierdurch wird die zumindest eine Fläche in einem geringen Abstand an dem Schwingkreis vorbeigeführt, sodass die Ausbildung von Wirbelströmen genügt, die eine geringe Erstreckung im Raum aufweisen. Idealerweise beträgt ein Abstand zwischen dem Schwingkreis und der zumindest einen vorbeiführenden elektrisch leitenden Wirkfläche nahezu eine Wandstärke der Fluidleitung im Anbindungsbereich des Schwingkreises. Der Abstand setzt sich dabei aus der Wandstärke und einem spitzenseitigen Flügelspalt zwischen dem Rotor und der Fluidleitung zusammen, um eine Reibung des Rotors an der Fluidleitung zu verhindern.

Erfindungsgemäß hat der Rotor zumindest zwei diametral angeordnete Flügelpaare, deren jeweils zwei Flügel über zumindest einen Ringbogen miteinander verbunden sind, der einen Bereich jeweils einer Wirkfläche bildet. Durch den jeweils zumindest einen Ringbogen erstrecken sich die Wirkflächen jeweils zumindest mit einem längeren Bereich in Drehrichtung. Gleichzeitig kann der Rotor weiterhin leichtgewichtig ausgeführt werden.

Bei einem bevorzugten Ausführungsbeispiel sind die Flügel jedes Flügelpaares endseitig über jeweils zwei Ringbögen miteinander verbunden und jedes Flügelpaar hat eine Wirkfläche, die sich jeweils über die zwei Ringbögen und Außenkanten der Flügel erstreckt. Durch die jeweils zwei Ringbögen in Kombination mit den jeweiligen Außenkanten wird pro Flügel quasi eine ringartige Wirkfläche geschaffen, die die Entstehung von Wirbelströmen begünstigt.

Zur Reduzierung eines fertigungstechnischen Aufwandes können die Flügel jeweils zwei voneinander abgewandte parallele Flügelflächen haben. Aus fertigungstechnischer Sicht sind die Flügelflächen bevorzugterweise eben. Selbstverständlich sind jedoch auch gewölbte Flügelflächen, gebogene Flügelflächen, schraubenartige Flügelflächen und dergleichen möglich.

Ein erfindungsgemäßes wasserführendes Haushaltgerät hat einen erfindungsgemäßen Durchflussmesser. Das wasserführende Haushaltsgerät ist beispielsweise ein Durchlauferhitzer oder ein Warmwasserspeicher, der sich durch die Verwendung des erfindungsgemäßen Durchflussmessers die Bereitstellung von Trinkwasser in einer hohen Reinheit ermöglicht. Zudem erlaubt ein derartiger Durchlauferhitzer aufgrund der hohen Dynamik des Durchflussmessers eine präzise Einstellung einer Soll-Temperatur. Aufgrund des Verzichtes auf einen Hall-Sensor ist das wasserführende Haushaltgerät kostengünstig.

Die Erfindung eignet sich insbesondere zur Bereitstellung eines wasserführenden Haushaltsgerätes, insbesondere ein Durchlauferhitzer oder ein Getränkespender wie eine Kaffeemaschine bzw. ein Kaffeevollautomat und dergleichen, das die Bereitstellung von Trinkwasser und/oder eines Getränks in einer hohen Reinheit erlaubt, wartungsarm und kostengünstig ist.

Im Folgenden werden bevorzugte Ausführungsbeispiele der Erfindung anhand schematischer Darstellungen näher erläutert. Es zeigen:
- Figur 1: einen Längsschnitt durch einen Leitungsabschnitt eines erfindungsgemäßen wasserführenden Haushaltsgerätes mit einem ersten Ausführungsbeispiel eines erfindungsgemäßen Durchflussmessers,
- Figur 2: einen Schnitt durch den Durchflussmesser entlang seiner Rotordrehachse aus Figur 1,
- Figur 3: eine Explosionsdarstellung des Durchflussmessers,
- Figuren 4 und 5: perspektivische Darstellungen des Durchflussmessers,
- Figuren 6 und 7: perspektivische Darstellungen eines Rotors des Durchflussmessers, und
- Figur 8: ein alternatives Ausführungsbeispiel des erfindungsgemäßen Durchflussmessers.

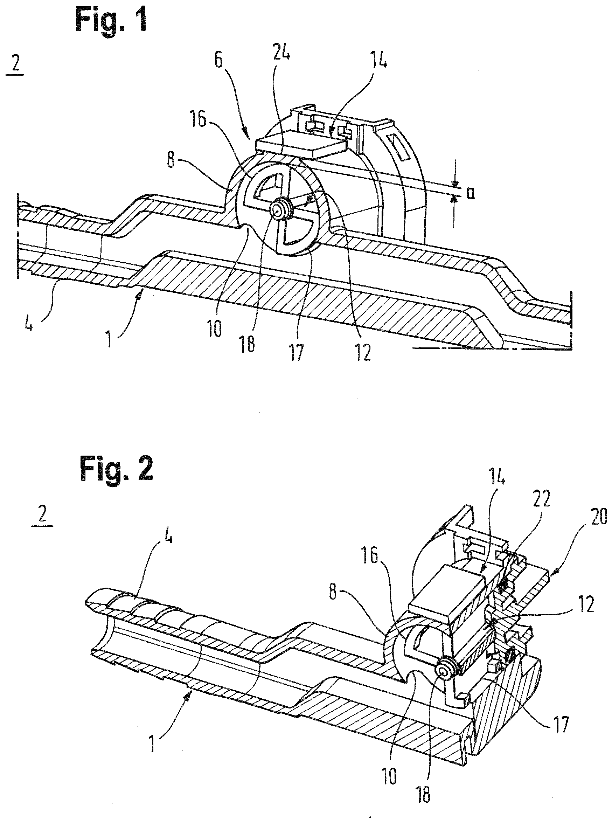

In den Figuren 1 und 2 ist ein Längsschnitt durch einen Leitungsabschnitt 1 eines wasserführenden Haushaltsgerätes 2 gezeigt. Das wasserführende Gerät ist beispielsweise ein Durchlauferhitzer und der Leitungsabschnitt 1 eine Zulaufleitung des Durchlauferhitzers. Das Haushaltsgerät 2 kann jedoch auch ein Getränkespender wie ein Kaffeevollautomat sein.

Der Leitungsabschnitt 1 hat ein Anschlussstück 4 zum Verbinden mit einer Wandinstallation und ein stromabwärts zum Anschlussstück 4 angeordneten Durchflussmesser 6. Der Durchflussmesser 6 ist in bzw. an einem zylinderförmigen Gehäuseabschnitt 8 des Leitungsabschnittes 1 angeordnet. Der Gehäuseabschnitt 8 erstreckt sich quer zum Leitungsabschnitt 1 und hat einen Innenraum, der über eine radiale Öffnung 10 mit dem Leitungsabschnitt 1 in Fluidverbindung steht.

Der Durchflussmesser 6 hat einen Rotor 12, der in dem Innenraum des Gehäuseabschnittes 2 angeordnet ist, und einen außerhalb des Gehäuseabschnittes 8 angeordnete Sensoreinrichtung 14.

Der Rotor 12 überdeckt die Öffnung 10 vollständig oder abschnittsweise und ist auf einer feststehenden Drehachse 18 des Rotors 12 quer zur Strömungsrichtung des Wassers in den Leitungsabschnitt 1 drehbar gelagert. Die Drehachse 18 ist in einen Lagerabschnitt 20 des Durchflussmessers 6 aufgenommen, der über einen Dichtring 22 den Innenraum zur Außenumgebung abdichtet.

Die Sensoreinrichtung 14 umfasst einen Schwingkreis mit einer entsprechenden Steuer-, Regel- und Auswerteelektronik. Die Steuer-, Regel- und Auswerteelektronik wird im Folgen allgemein als Elektronik bezeichnet. Er dient zur Erfassung einer Rotation des Rotors 12, der hierzu in dem hier gezeigten Ausführungsbeispiel zwei zueinander entgegengesetzte Wirkflächen 16, 17 hat, die im Folgenden noch näher erläutert werden. Der Schwingkreis weist in dem hier gezeigten Ausführungsbeispiel zumindest eine Spule, einen Kondensator und eine Stromversorgung auf. Selbstverständlich kann der Schwingkreis weitere elektrische Elemente aufweisen oder beispielsweise ohne einen Kondensator ausgeführt sein. Der Schwingkreis wird bevorzugterweise in MHz betrieben und ist in dem hier gezeigten Ausführungsbeispiel an einer planen Oberfläche 24 des Gehäuseabschnittes 8 angeordnet.

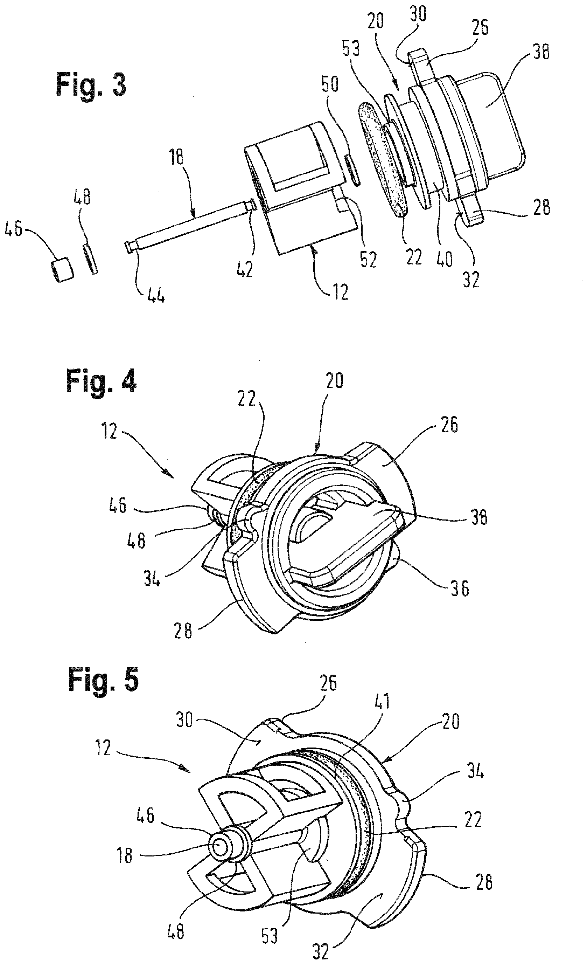

Gemäß den Figuren 3, 4 und 5 hat der Lagerabschnitt 20 zwei bezogen auf die Drehachse 18 zueinander entgegengesetzte Anschläge 26, 28, die ohrenartig ausgebildet sind und jeweils eine stirnseitige Anschlagfläche 30, 32 zum Begrenzen einer axialen Einbauposition des Rotors 12 in dem Gehäuseabschnitt 8 aufweisen. Zur Lagesicherung des Lageabschnittes 20 an dem Gehäuseabschnitt 8 sind seitlich der Anschläge 26, 28 zwei Rastnasen 34, 36 angeordnet, die in eine entsprechende Rastvertiefung des Gehäuseabschnittes 8 eingreifen. Zur Handhabung des weist der Lageabschnitt 20 ein plattenartiger Griffelement 38 auf, der sich zwischen den Anschlägen 26, 28 erstreckt. Zur radialen Positionierung des Rotors 12 in dem Innenraum hat der Lagerabschnitt 20 einen Zylinderabschnitt 41, in deren Umfangsfläche eine Umfangsnut 40 zur Aufnahme des Dichtrings 22 eingebracht ist.

Die Drehachse 18 des Rotors 12 ist gemäß Figur 3 endseitig mit jeweils einer ringartigen Rastnut 42, 44 versehen. Die gemäß der Darstellung in Figur 3 rechte Rastnut 42 taucht in ein korrespondierendes Gegenelement des Lageabschnittes 20, ein wodurch die Drehachse 18 formschlüssig mit dem Lageabschnitt 20 verbunden ist. Die gemäß der Darstellung in Figur 3 linke Rastnut 44 wirkt mit einem auf die Drehachse 18 aufschiebbaren Sicherungsring 46 zusammen, mittels dem der Rotor 12 auf der Drehachse 18 in Axialrichtung gesichert ist. Seitlich des Rotors 12 kann jeweils eine Distanzscheibe 48, 50 zum Optimieren eines Drehverhaltens des Rotors 12 angeordnet sein. Der Sicherungsring 46 und die Distanzscheiben 48, 50 sind eisenfrei und bestehen bevorzugterweise aus einem Kunststoffmaterial oder einem Leichtmetall wie Aluminium oder Titan.

Zur Reduzierung einer axialen Baulänge des Rotors 12 kann dieser in seinem dem Lagerabschnitt 20 zugewandten Stirnseite eine zentrale Rückstufung 52 aufweisen, sodass es einen, sich von dem Zylinderabschnitt 41 erstreckenden zentralen Axialvorsprung 53 des Lageabschnitt 20 radial umgreift.

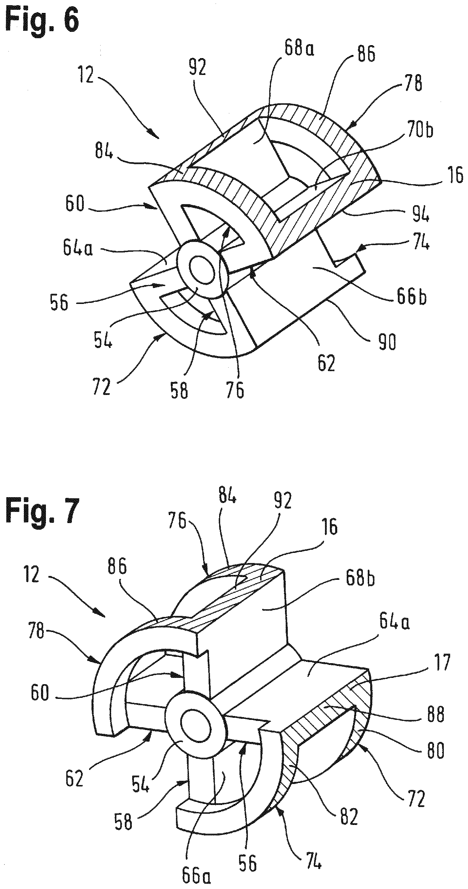

Gemäß den Figuren 6 und 7 hat der Rotor 12 eine Nabe 54 zur Lagerung auf der Drehachse 18 und zwei diametral zueinander angeordnete Flügelpaare, die jeweils zwei Flügel 56, 58 und 60, 62 aufweisen. Der Rotor 12 ist somit als ein Flügelrad ausgebildet. Er ist in dem hier gezeigten Ausführungsbeispiel ein einteiliges Spritzgussteil aus einem Kunststoff und besteht somit aus einem elektrisch isolierenden Material. Selbstverständlich kann der Rotor 12 auch aus einem elektrisch leitfähigen Material bestehen und beispielsweise ein Aluminiumgussteil sein. Erfindungsgemäß ist der Rotor 12 dauermagnetfrei.

Die Flügel 56, 58 und 60, 62 haben jeweils zwei parallele ebene Flügelflächen 64a und 66a, 66b und 68a, 68b und 70a, 70b. Aufgrund der gewählten Perspektive in den Figuren 6 und 7 ist eine Flügelfläche 66b des Flügels 56 nicht zu erkennen und somit nicht beziffert. Sie liegt jedoch in Umfangsrichtung betrachtet der Flügelfläche 66a gegenüber. Die Flügel 56, 58 und 60, 62 sind jeweils über zwei endseitige Ringbögen 72, 74 und 76, 78 paarweise miteinander verbunden. Die Ringbögen 72, 74 und 76, 78 sind somit spitzenseitig des Rotors 12 angeordnet, wobei die Ringbögen 72, 74 und 76, 78 eines Flügelpaares in Richtung der Drehachse 18 bzw. in Axialrichtung voneinander beabstandet sind.

Eine jeweils auf die Drehachse 18 bezogen radial äußere Bogenfläche 80, 82, 84, 86 der Ringbögen 72, 74 und 76, 78 sowie radial äußere Außenkanten 88, 90 und 92, 94 der Flügel 56, 58 und 60, 62 bilden zusammen jeweils die hier schraffiert angedeuteten Wirk-flächen 16, 17 der Flügelpaare. Somit hat der hier gezeigte Rotor 12 zwei voneinander abgewandte radial äußere und insbesondere ringartige Wirkflächen 16, 17, wobei die Flächen 80, 88, 82, 90 die Wirkfläche 16 und die Flächen 84, 92, 86, 94 die Wirkfläche 17 bilden. Die Wirkflächen 16, 17 sind elektrisch leitende und lebensmittelechte Beschichtungen, beispielsweise Kupferbeschichtungen. Die Beschichtungen können beispielsweise galvanisch, aufgedampft, bedruckt und dergleichen aufgetragen werden. Die Wirkflächen 16, 17 sind bezogen auf die Drehachse 18 radiale Außenumfangsflächen des Rotors 12 und bei einer Umdrehung abwechselnd in einem minimalen Radialabstand a von der Sensoreinrichtung 14 positioniert (Figur 1). Der Radialabstand a entspricht etwa der in etwa einer Wandstärke des Gehäuseabschnittes 8 im Bereich der Oberfläche 24 zuzüglich eines Spitzenspaltes, um ein Schleifen der Flügel 56, 58 und 60, 62 entlang des Gehäuseabschnitts 8 zu verhindern. Wenn der Rotor 12 aus einem Leichtmetallmaterial besteht, wirkt der gesamte Rotor 12 als Wirkfläche.

Die Wirkflächen 16, 17 dienen ausschließlich zum Zusammenwirken mit der Sensoreinrichtung 1, wohingegen die Flügelflächen ausschließlich zum Antreiben des Rotors 12 dienen. Somit erfüllen die Wirkflächen 16, 17 und die Flügelflächen 64a und 66a, 66b und 68a, 68b und 70a, 70b unterschiedliche Funkionen und können auf diese jeweils optimal eingestellt werden.

Wenn nun aufgrund einer Wasserströmung in dem Leitungsabschnitt 1 der Rotor 12 in Rotation versetzt wird und der Schwingkreis Sensoreinrichtung 14 bestromt ist, werden in den Wirkflächen 16, 17 jeweils Wirbelströme induziert, die zu einer Dämpfung des Schwingkreises der Sensoreinrichtung führen. Die Dämpfung resultiert in einem Leistungsabfall, der von der Elektronik der Sensoreinrichtung 14 erfasst und ausgewertet wird. Je nach der benötigen Zusatzleistung zum Ausgleich der Dämpfung bzw. je nach dem Dämpfungsgrad ermittelt so die Elektronik den jeweiligen Volumenstrom.

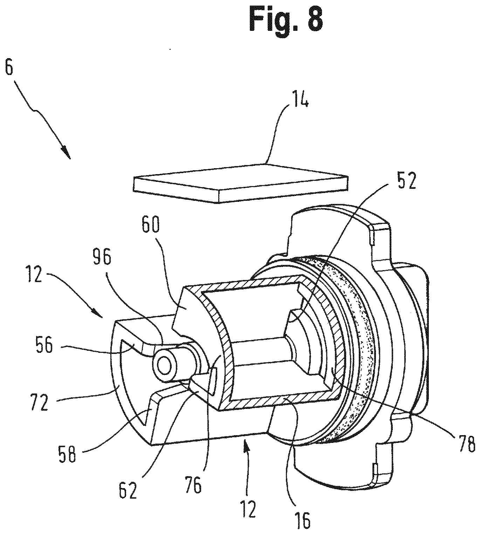

Bei dem in Figur 8 gezeigten zweiten Ausführungsbeispiel des erfindungsgemäßen Durchflussmessers 6 ist der Rotor 12 nicht nur lagerabschnittseitig mit einer zentralen Rückstufung 52 versehen, sondern ebenfalls sicherungsringseitig. Die sicherungsringseitige Rückstufung 96 ermöglicht ein Eintauchen des Sicherungsringes 46 zwischen die Flügelpaare bzw. die Flügel 56, 58 und 60, 62, wodurch diese entweder in Richtung ihrer Drehachse 18 verlängert werden können oder die Drehachse 18 reduziert werden kann. Die sonstigen Elemente wie Sensoreinrichtung 14 mit Schwingkreis, Ringbögen 72, 74 und 76, 78 und Wirkflächen 16, 17 sind gleich dem vorhergehenden Ausführungsbeispiel nach den Figuren 1 bis 7. Der Ringbogen 74 ist aufgrund der Perspektive in Figur 8 nicht zu erkennen.

Offenbart ist ein Durchflussmesser zum Messen eines Durchflusses eines Fluids in einer Fluidleitung, mit einem innerhalb der Fluidleitung zumindest abschnittsweise anordbaren Rotor und mit einer außerhalb der Fluidleitung anordbaren Sensoreinrichtung zur Erfassung einer Rotation einer Wirkfläche des Rotors, wobei die Sensoreinrichtung ein Schwingkreis aufweist, der Rotor keinen Dauermagneten besitzt und die zumindest eine Wirkfläche elektrisch leitend ist, sowie ein wasserführendes Haushaltsgerät.

### Bezugszeichenliste

- 1: Leitungsabschnitt eines
- 2: wasserführendes Haushaltsgerät
- 4: Anschlussstück
- 6: Durchflussmesser
- 8: Gehäuseabschnitt
- 10: Öffnung
- 12: Rotor
- 14: Sensoreinrichtung
- 16: Wirkfläche
- 17: Wirkfläche
- 18: Drehachse
- 20: Lagerabschnitt
- 22: Dichtring
- 24: Oberfläche
- 26: Anschlag
- 28: Anschlag
- 30: Anschlagfläche
- 32: Anschlagfläche
- 34: Rastnase
- 36: Rastnase
- 38: Griffelement
- 40: Umfangsnut
- 41: Zylinderabschnitt
- 42: Rastnut
- 44: Rastnut
- 46: Sicherungsring
- 48: Distanzscheibe
- 50: Distanzscheibe
- 52: Rückstufung
- 53: Axialvorsprung
- 54: Nabe
- 56: Flügel
- 58: Flügel
- 60: Flügel
- 62: Flügel
- 64a, b: Flügelfläche
- 66a, b: Flügelfläche
- 68a, b: Flügelfläche
- 70a, b: Flügelfläche
- 72: Ringbogen
- 74: Ringbogen
- 76: Ringbogen
- 78: Ringbogen
- 80: Bogenfläche
- 82: Bogenfläche
- 84: Bogenfläche
- 86: Bogenfläche
- 88: Außenkanten
- 90: Außenkanten
- 92: Außenkanten
- 94: Außenkanten
- 96: Rückstufung

- a: Radialabstand

## Patentansprüche

1. Durchflussmesser (6) zum Messen eines Durchflusses eines Fluids in einer Fluidleitung (1), mit einem innerhalb der Fluidleitung (1) zumindest abschnittsweise anordbaren Rotor (12) und mit einer außerhalb der Fluidleitung (1) anordbaren Sensoreinrichtung (14) zur Erfassung einer Rotation einer Wirkfläche (16, 17) des Rotors (12), wobei die Sensoreinrichtung (14) einen Schwingkreis aufweist, der Rotor (12) dauermagnetfrei ist und die zumindest eine Wirkfläche (16, 17) elektrisch leitend ist,
**dadurch gekennzeichnet, dass**
der Rotor (12) zumindest zwei diametral angeordnete Flügelpaare aufweist, deren jeweils zwei Flügel (56, 58, 60, 62) über zumindest einen Ringbogen (72, 74, 76, 78) miteinander verbunden sind, der einen Bereich jeweils einer Wirkfläche (16, 17) bildet.

2. Durchflussmesser nach Anspruch 1, wobei der Rotor (12) aus einem elektrisch isolierenden Material besteht und die zumindest eine Wirkfläche (16, 17) eine elektrisch leitende Beschichtung des Rotors (12) ist.

3. Durchflussmesser nach Anspruch 1, wobei der Rotor (12) aus einem elektrisch leitenden Material besteht.

4. Durchflussmesser nach Anspruch 1, 2 oder 3, wobei die zumindest eine Wirkfläche (16, 17) bezogen auf die Drehachse (18) radial außen angeordnet ist.

5. Durchflussmesser nach einem der vorhergehenden Ansprüche, wobei die Flügel (56, 58, 60, 62) jedes Flügelpaares endseitig über jeweils zwei Ringbögen (72, 74, 76, 78) miteinander verbunden sind und jedes Flügelpaar eine Wirkfläche (16, 17) aufweist, die sich jeweils über die zwei Ringbögen (72, 74, 76, 78) und Außenkanten der Flügel (56, 58, 60, 62) erstreckt.

6. Durchflussmesser nach einem der vorhergehenden Ansprüche, wobei die Flügel (56, 58, 60, 62) jeweils zwei voneinander abgewandte parallele Flügelflächen (64a, 66a, 66b, 68a, 68b, 70a, 70b) haben.

7. Wasserführendes Haushaltsgerät (2) mit einem Durchflussmesser nach einem der Ansprüche 1 bis 6.

## Claims

1. Flow meter (6) for measuring a throughflow of a fluid in a fluid line (1), having a rotor (12) which can be arranged at least in sections within the fluid line (1), and having a sensor device (14) which can be arranged outside the fluid line (1) for detecting a rotation of an active face (16, 17) of the rotor (12), the sensor device (14) having a tuned circuit, the rotor (12) being permanent magnet-free, and the at least one active face (16, 17) being electrically conducting,
**characterized in that**
the rotor (12) has at least two diametrically arranged blade pairs, the two blades (56, 58, 60, 62) of which in each case are connected to one another via at least one annular arc (72, 74, 76, 78) which forms a region of in each case one active face (16, 17).

2. Flow meter according to Claim 1, the rotor (12) consisting of an electrically insulating material, and the at least one active face (16, 17) being an electrically conducting coating of the rotor (12).

3. Flow meter according to Claim 1, the rotor (12) consisting of an electrically conducting material.

4. Flow meter according to Claim 1, 2 or 3, the at least one active face (16, 17) being arranged radially on the outside in relation to the rotational axis (18).

5. Flow meter according to one of the preceding claims, the blades (56, 58, 60, 62) of each blade pair being connected to one another on the end side via in each case two annular arcs (72, 74, 76, 78), and each blade pair having an active face (16, 17) which extends in each case over the two annular arcs (72, 74, 76, 78) and outer edges of the blades (56, 58, 60, 62).

6. Flow meter according to one of the preceding claims, the blades (56, 58, 60, 62) having in each case two parallel blade faces (64a, 66a, 66b, 68a, 68b, 70a, 70b) which face away from one another.

7. Water-conducting household appliance (2) having a flow meter according to one of Claims 1 to 6.

## Revendications

1. Débitmètre (6) pour mesurer un débit d'un fluide dans une conduite de fluide (1), avec un rotor (12) pouvant être disposé au moins en partie à l'intérieur de la conduite de fluide (1), et avec un dispositif de capteur (14) pouvant être disposé à l'extérieur de la conduite de fluide (1) pour détecter une rotation d'une surface fonctionnelle (16, 17) du rotor (12), le dispositif de capteur (14) présentant un circuit oscillant, le rotor (12) étant dépourvu d'aimant permanent et l'au moins une surface fonctionnelle (16, 17) étant électriquement conductrice,
**caractérisé en ce que**
le rotor (12) présente au moins deux paires de pales disposées diamétralement, dont à chaque fois deux pales (56, 58, 60, 62) sont connectées l'une à l'autre par le biais d'au moins un arc annulaire (72, 74, 76, 78) qui forme une région d'une surface fonctionnelle respective (16, 17).

2. Débitmètre selon la revendication 1, dans lequel le rotor (12) se compose d'un matériau électriquement isolant et l'au moins une surface fonctionnelle (16, 17) est un revêtement électriquement conducteur du rotor (12).

3. Débitmètre selon la revendication 1, dans lequel le rotor (12) se compose d'un matériau électriquement conducteur.

4. Débitmètre selon la revendication 1, 2 ou 3, dans lequel l'au moins une surface fonctionnelle (16, 17) est disposée radialement à l'extérieur par rapport à l'axe de rotation (18).

5. Débitmètre selon l'une quelconque des revendications précédentes, dans lequel les pales (56, 58, 60, 62) de chaque paire de pales sont connectées l'une à l'autre du côté de l'extrémité à chaque fois par deux arcs annulaires (72, 74, 76, 78) et chaque paire de pales présente une surface fonctionnelle (16, 17) qui s'étend à chaque fois sur les deux arcs annulaires (72, 74, 76, 78) et les arêtes extérieures des pales (56, 58, 60, 62).

6. Débitmètre selon l'une quelconque des revendications précédentes, dans lequel les pales (56, 58, 60, 62) présentent à chaque fois deux surfaces de pales parallèles opposées l'une à l'autre (64a, 66a, 66b, 68a, 68b, 70a, 70b).

7. Appareil ménager conduisant de l'eau (2) comprenant un débitmètre selon l'une quelconque des revendications 1 à 6.
